## Europäisches Patentamt
## European Patent Office
## Office européen des brevets

(19)

(11) Numéro de publication: **0 145 514**
**B1**

(12)

# FASCICULE DE BREVET EUROPÉEN

(45) Date de publication du fascicule du brevet:
**08.06.88**

(51) Int. Cl.⁴: **G 21 C 3/20**, G 21 C 3/06

(21) Numéro de dépôt: **84401770.7**

(22) Date de dépôt: **06.09.84**

(54) Elément de combustible nucléaire.

(30) Priorité: **06.09.83 FR 8314327**

(43) Date de publication de la demande:
**19.06.85 Bulletin 85/25**

(45) Mention de la délivrance du brevet:
**08.06.88 Bulletin 88/23**

(84) Etats contractants désignés:
**BE DE GB IT SE**

(56) Documents cité:
**DE-A-1 454 486**
**FR-A-2 260 849**
**FR-A-2 260 850**
**FR-A-2 276 662**
**FR-A-2 290 737**
**FR-A-2 399 713**
**US-A-3 625 821**
**US-A-4 200 492**
**US-A-4 390 497**

(73) Titulaire: **FRAMATOME, Tour Fiat 1 place de la Coupole, F-92400 Courbevoie (FR)**

(72) Inventeur: **Dodelier, Jacques, 56, Allée du Camaieu, F-69570 Dardilly (FR)**
Inventeur: **Melin, Philippe, 18B, Avenue des Champfleury A3 Les Clots, F-69470 Champagne Au Mont D'or (FR)**

(74) Mandataire: **Fort, Jacques, CABINET PLASSERAUD 84, rue d'Amsterdam, F-75009 Paris (FR)**

EP 0 145 514 B1

LIBER, STOCKHOLM 1988

## Description

L'invention a pour objet un élément de combustible nucléaire pour réacteur nucléaire refroidi et modéré par l'eau du type comportant un empilement de pastilles de combustible contenues dans une gaine tubulaire fermée en un matériau résistant au fluage et à la corrosion sous l'action de l'eau à pression et températures élevées, le terme "combustible" devant être interprété dans un sens large et comme désignant aussi bien un matériau fissile qu'un matériau fertile.

La gaine d'un combustible nucléaire a notamment pour rôle d'éviter l'échappement des produits gazeux de fission dans le fluide réfrigérant et d'éviter la mise en contact du matériau combustible et du réfrigérant et l'apparition de réactions chimiques. Dans un élément de combustible classique, la gaine assure également une fonction mécanique: elle doit maintenir l'empilement de pastilles et résister à la différence des pressions qui règnent à l'intérieur et à l'extérieur.

La tenue à long terme des éléments de combustible nucléaire, notamment dans un réacteur refroidi et modéré à l'eau légère, se heurte notamment au problème de l'interaction pastilles-gaine. Cette interaction résulte de la combinaison d'une action mécanique, de la mise en contrainte de la gaine lors du gonflement et de la dilatation des pastilles sous irradiation, et d'une action chimique, due notamment aux produits de fission libérés par les pastilles sous irradiation.

On a déjà proposé de diminuer l'incidence de cette interaction, qui provoque une fragilisation et une fissuration sous contrainte, en disposant entre la gaine et les pastilles une barrière supplémentaire. De nombreux types de barrières ont été proposés. Une énumération en est donnée par exemple dans le brevet US-A-4 200 492 (Armijo et autres). Ce brevet décrit de plus une barrière constituée par une couche revêtant la surface interne de la gaine, liée métallurgiquement à elle, et constituée d'éponge de zirconium. Cette solution comme toutes celles qui prévoient une liaison métallurgique entre gaine et barrière, présente des inconvénients aussi bien pour la fabrication des gaines que pour la réalisation d'une barrière homogène. La liaison pose en effet des problèmes de fiabilité. Les irrégularités d'épaisseur de la barrière se traduisent par des points affaiblis. Enfin, la présence d'une liaison métallurgique fait que la gaine composite ainsi réalisée ne peut tout à la fois assurer une résistance élevée au fluage et au grandissement sous irradiation en présence d'un réfrigérant à température et pression élevées et une aptitude à la relaxation des contraintes induites par les pastilles.

On a également proposé (FR-A-2 276 662) un élément combustible du type ci-dessus défini comprenant de plus un tube ouvert de maintien de l'empilement sur au moins une partie de sa longueur, en alliage à base de zirconium. Mais ce tube est destiné à servir de support de site réactionnel pour les produits de fission ou de substrat de matériau fertile ou de poison consommable. Les caractères que présente un tel tube ne sont pas destinés à réduire les phénomènes mentionnés plus haut ou propres à les combattre.

L'invention vise notamment à fournir un élément de combustible nucléaire du type ci-dessus défini répondant mieux que ceux antérieurement connus aux exigences de la pratique, notamment par une plus grande fiabilité et par une simplification de la réalisation. Dans ce but, l'invention propose un élément de combustible destiné à un réacteur nucléaire refroidi et modéré par de l'eau suivant le préambule de la revendication 1, caractérisé en ce que le tube est constitué en alliage de zirconium ayant subi un détensionnement à une température comprise entre 440° et 480° de façon qu'il présente une limite élastique supérieure à celle de la gaine de l'empilement et en ce que le tube est séparé de la gaine par un intervalle radial initial compris entre 0,05 mm et 0,20 mm suffisant pour retarder la venue en contact du tube et de la gaine sous irradiation.

La gaine peut notamment être constituée par un tube en alliage de zirconium ayant subi un traitement de recristallisation à une température comprise entre 550°C et 650°C de manière à augmenter sa résistance au fluage et à l'action du réfrigérant, tandis que le tube interne, d'épaisseur plus faible que la gaine, est en zirconium allié.

Dans une telle disposition, la gaine assure le confinement et l'étanchéité. Le tube maintient l'empilement de pastilles de combustible nucléaire, éventuellement sur une fraction limitée de la longueur de l'élément, typiquement celle qui est soumise au flux neutronique le plus élevé.

Dans tous les cas, du fait de l'indépendance de la gaine et du tube, on dispose d'une grande liberté dans le choix des matériaux constitutifs. Les surfaces en regard des deux gaines peuvent au surplus recevoir du poison consommable, qui se trouve ainsi isolé du fluide réfrigérant. Le volume représenté par cet intervalle constitue un volume supplémentaire de réception des produits gazeux de fission s'échappant des pastilles et permet en conséquence d'utiliser, pour une longueur de l'élément donnée, une colonne active de pastilles de combustible plus importante que dans un élément classique.

L'invention sera mieux comprise à la lecture de la description qui suit d'un élément de combustible qui en constitue un mode particulier de réalisation, donné à titre d'exemple non limitatif. La description se réfère au dessin qui l'accompagne, dans lequel:

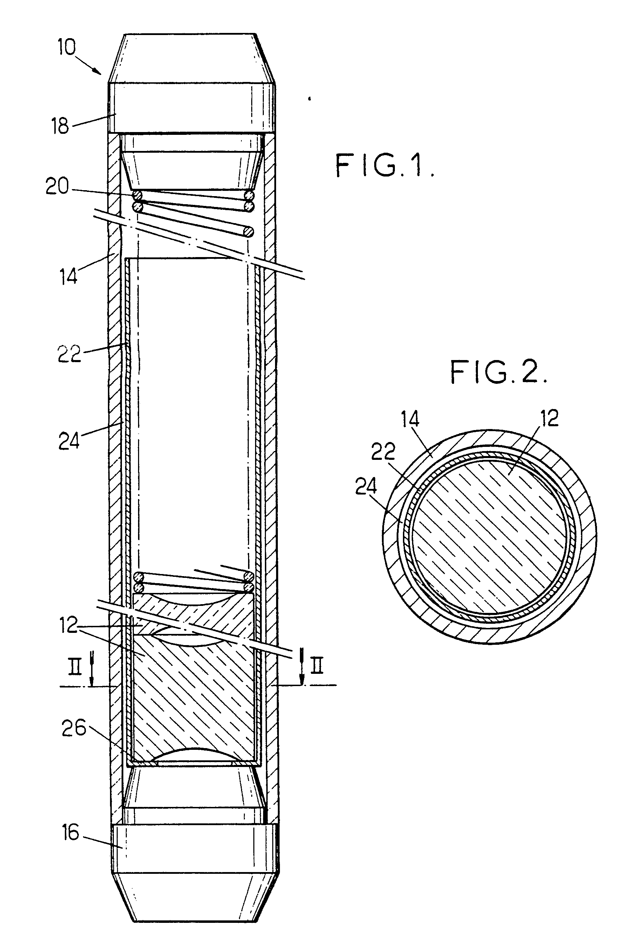

- la Figure 1 est une vue en coupe longitudinale schématique de l'élément;
- la Figure 2 est une coupe transversale suivant la ligne II-II de la Figure 1.

L'élément de combustible montré à titre d'exemple sur les Figures est destiné à un réacteur nucléaire refroidi et modéré par de l'eau légère sous pression. Un tel élément de combustible 10, fréquemment dénommé "crayon", comprend des pastilles empilées 12 de matériau combustible fissile, généralement de l'oxyde d'uranium enrichi. Les pastilles 12 sont empilées pour constituer une colonne. Cette colonne est contenue dans une gaine 14 constituée par un tube mince en alliage de zirconium. On utilise notamment les alliages dits "zircaloy 4", qui comportent essentiellement, en plus du zirconium, de l'étain, du fer et du chrome, tandis que leur teneur en nickel est très faible, habituellement inférieure à 70 ppm. Les "zircaloy 4" peuvent également comporter, en plus des impuretés inévitables, des éléments d'addition et notamment du carbone qui, à l'état solubilisé à une teneur comprise entre 80 et 270 ppm, améliore les propriétés mécaniques. A titre d'exemple, on peut indiquer qu'on utilise fréquemment des crayons dont la gaine a un diamètre externe d'environ 9,5 mm et une épaisseur de 0,5 mm contenant une colonne de pastilles de 3,65 m environ de hauteur. La gaine 14 est fermée par un bouchon inférieur 16 et un bouchon supérieur 18 soudés, en matériau de même nature que la gaine 14. L'espace compris entre la face supérieure de la colonne et le bouchon 18 constitue un volume de réception des produits de fission. Il contient de plus un ressort 20 de maintien en place de la colonne, qui prend appui, d'une part, sur le bouchon 18, d'autre part, sur la pastille 12 la plus haute de la colonne.

Dans le mode de réalisation de l'invention montré sur les Figures, l'élément 10 comprend un tube supplémentaire 22 placé entre la colonne de pastilles 12 et la gaine 14. Ce tube, d'épaisseur plus faible que la gaine, est également en alliage à base de zirconium. Son diamètre extérieur est légèrement inférieur à celui de la gaine de façon à laisser subsister, sur l'élément 10 un jeu 24 suffisant pour que les dilatations thermiques différentielles et le gonflement sous irradiation des pastilles ne puissent provoquer une application du tube 22 sur la gaine 14 telle qu'il y ait frettage. Ce risque de frettage peut être encore diminué en donnant au diamètre interne du tube 22 une valeur légèrement supérieure au diamètre initial des pastilles 12, ce jeu éventuel étant toutefois inférieur au jeu 24.

La gaine 14 et le tube 22 sont réalisés de façon à présenter des propriétés mécaniques nettement différentes. Le tube interne 22 doit être traité pour avoir une limite élastique élevée et permettre une bonne relaxation des contraintes. Pour cela, il peut être soumis à un détensionnement de fin de fabrication à une température comprise entre 440 et 480°C, typiquement à environ 460°C dans le cas où il est constitué de zircaloy 4. Au contraire, la gaine 14 est traitée de façon à avoir une résistance au fluage et à l'action du réfrigérant élevée. Son traitement final peut, pour cela, être constitué par une recristallisation à une température comprise entre 550 et 650°C, typiquement environ 575°C dans le cas de zircaloy 4.

Toujours dans le cas d'utilisation de zircaloy 4, le jeu entre tubes 22 et gaines 14 peut être compris entre 0,05 mm et 0,20mm dans le cas d'un diamètre interne du tube 22 d'environ 8 mm.

Il faut noter que le volume représenté par ce jeu 24 s'ajoute à celui prévu au-dessus de la colonne de pastilles pour recevoir les gaz de fission.

Dans le mode de réalisation illustré, le tube 22 présente une collerette inférieure 26 interposée entre la pastille 12 la plus basse et le bouchon 16. Le tube 22 se trouve ainsi retenu en place et peut avoir une longueur à peine supérieure à celle de la colonne de pastilles. Dans cette disposition, le tube 22 ne comporte pas de moyens permettant de le centrer exactement dans la gaine 14, mais le risque de décentrage est sans inconvénient. Toutefois, on peut évidemment prévoir sur le tube 22 des moyens de centrage en relief.

La fabrication de l'élément peut être classique: le bouchon inférieur 16 est fixé à la gaine par soudage. Le tube 22 est mis en place. Les pastilles sont enfilées dans le tube puis le ressort 20 est placé. Le bouchon 18, percé d'un trou central, est mis en place et soudé. Le volume intérieur de la gaine est vidé, purgé puis rempli d'un gaz inerte, généralement l'hélium, sous une pression choisie pour diminuer les contraintes dues à la pression élevée du réfrigérant qui s'exerce sur la gaine 14. Enfin, le passage ménage dans le bouchon 18 est obturé.

L'invention est susceptible de nombreuses variantes de réalisation. Par exemple, la face interne de la gaine 14 ou la face externe du tube 22 peuvent être revêtues, éventuellement sur une fraction seulement de leur longueur, d'une couche contenant un poison consommable. Le tube 22 peut se réduire à des tronçons ne s'étendant que sur une fraction de la colonne de pastilles 12. L'élément de combustible peut comporter des pastilles pleines ou annulaires en matériau fertile. Il peut être prévu pour être immobilisé dans un assemblage de combustible ou, au contraire, être placé dans un ensemble mobile. Quel que soit le mode de réalisation adopté, ou quel que soit le mode de fonctionnement adopté pour la chaudière, conduisant à des variations de puissance importantes cycliques ou localisées dans le temps, l'élément de combustible suivant l'invention comporte une résistance accrue aux contraintes neutroniques et mécaniques, puisque les fissurations éventuelles n'affecteront que le tube intérieur.

## Revendications

1. Elément de combustible nucléaire pour réacteur nucléaire refroidi et modéré par de l'eau, comportant un empilement de pastilles (12) de combustible contenu dans une gaine tubulaire (14) fermée, en un matériau résistant au fluage et à la corrosion sous l'action de l'eau à pression et température élevées, et comprenant de plus un tube ouvert (22) de maintien de l'empilement sur au moins une partie de sa longueur, constitué en alliage à base de zirconium, séparant la gaine de l'empilement, caractérisé en ce que le tube est constitué en alliage ayant subi un détensionnement à une température comprise entre 440° et 480° pour repousser sa limite élastique au del à de celle de l'alliage de la gaine et en ce que le tube est séparé de la gaine par un intervalle radial initial compris entre 0,05 mm et 0,20 mm suffisant pour retarder la venue en contact du tube et de la gaine sous irradiation.

2. Elément de combustible selon la revendication 1, caractérisé en ce que la gaine est constituée en alliage à base de zirconium ayant subi un traitement de recristallisation à une température comprise entre 550°C et 650°C pour augmenter sa résistance au fluage et à l'action du réfrigérant.

3. Elément de combustible selon l'une quelconque des revendications précédentes, caractérisé en ce que la face interne de la gaine ou la face externe du tube sont revêtues d'une couche contenant un poison neutronique consommable.


## Patentansprüche

1. Kernbrennstoffelement für wassergekühlte und moderierte Kernreaktoren mit einem Stapel aus Brennstofftabletten (12), die in einer rohrförmigen geschlossenen Hülle (14) enthalten sind, die gegenüber einem Fließen und Korrosion unter Einwirkung von unter Druck stehendem Wasser und hohen Temperaturen widerstandsfähig ist und zusätzlich ein offenes Rohr (22) zur Halterung des Stapels über mindestens einen Teil seiner Länge aufweist, das aus einer Zirkoniumlegierung besteht und die Schutzhülle und den Stapel voneinander trennt,
dadurch gekennzeichnet, daß
das Rohr aus einer Legierung besteht, die einer Spannungs-Glüh -Behandlung bei einer Temperatur zwischen 440 und 480° unterzogen wurde, um ihre Elastizitätsgrenzen gegenüber denen der Legierung der Schutzhülle zu erweitern und dadurch, daß das Rohr von der Schutzhülle durch einen ursprünglichen radialen Abstand getrennt ist, der zwischen 0,05 und 0,2 mm liegt und ausreicht, um die Berührung des Rohres mit der Schutzhülle unter Strahleneinwirkung zu verzögern.

2. Kernbrennstoffelement nach Anspruch 1, dadurch gekennzeichnet, daß die Schutzhülle aus einer Zirkoniumlegierung besteht, die eine Rekristallisationsbehandlung bei einer Temperatur zwischen 550 und 650°C erfahren hat, um ihre Widerstandsfähigkeit gegenüber einem Fließen und gegenüber der Einwirkung des Kühlmittels zu erhöhen.

3. Kernbrennstoffelement nach einem der vorstehenden Ansprüche,
dadurch gekennzeichnet, daß
die Innenfläche der Schutzhülle oder die Außenfläche des Rohres mit einer Schicht, die ein abtrennbares Neutronengift enthält beschichtet wird.


## Claims

1. Nuclear fuel element for a water cooled and moderated nuclear reactor, comprising a stack of fuel pellets (12) contained in a closed tubular cladding (14) of a material having a resistance to creep and to corrosion by high temperature pressurized water and further comprising an open tube (22) for supporting the stack over part at least of its length, constituted of zirconium base alloy and separating the cladding from the stack,
characterized in that the tube is constituted of an alloy which has undergone strain removal at a temperature of from 440°C to 480°C for increasing its resiliency limit beyond that of the alloy which constitutes the cladding and in that the tube is separated from the cladding by an initial radial gap of from 0.05 mm to 0.20 mm sufficient for delaying mutual abutment of the tube and cladding under irradiation.

2. Fuel element according to claim 1, characterized in that the cladding consists of a zirconium base alloy which has undergone a recrystallization treatment at a temperature of from 550°C to 650°C which increases its resistance to creep and to action by the coolant.

3. Fuel element according to any one of the preceding claims, characterized in that the internal surface of the cladding or the external surface of the tube are coated with a layer which contains a burnable neutron poison.